Europäisches Patentamt

European Patent Office

Office européen des brevets

(19)

(11) Veröffentlichungsnummer: **0 203 366**
**B1**

(12) **EUROPÄISCHE PATENTSCHRIFT**

(45) Veröffentlichungstag der Patentschrift: **18.07.90**

(21) Anmeldenummer: **86105592.9**

(22) Anmeldetag: **23.04.86**

(51) Int. Cl.⁵: **H 01 H 47/32**, H 02 H 3/247

(54) **Steuervorrichtung für elektromagnetische Schaltgeräte.**

(30) Priorität: **06.05.85 DE 3516228**

(43) Veröffentlichungstag der Anmeldung:
**03.12.86 Patentblatt 86/49**

(45) Bekanntmachung des Hinweises auf die
Patenterteilung:
**18.07.90 Patentblatt 90/29**

(84) Benannte Vertragsstaaten:
**AT CH DE FR GB IT LI**

(56) Entgegenhaltungen:
**DE-A-1 949 362**
**DE-A-2 318 437**
**GB-A-1 370 942**
**US-A-4 176 388**

**Die Akte enthält technische Angaben, die nach
dem Eingang der Anmeldung eingereicht
wurden und die nicht in dieser Patentschrift
enthalten sind.**

(73) Patentinhaber: **Siemens Aktiengesellschaft
Wittelsbacherplatz 2
D-8000 München 2 (DE)**

(72) Erfinder: **Harbauer, Werner, Dipl.-Ing.
Flurstrasse 57
D-8460 Schwandorf (DE)**
Erfinder: **Kölpin, Thomas, Dr.
Marienstrasse 1e
D-8450 Amberg (DE)**
Erfinder: **Seitz, Johann, Dipl.-Ing. (FH)
Kohlenstrasse 15
D-8460 Schwandorf (DE)**

Courier Press, Leamington Spa, England.

## Beschreibung

Die Erfindung bezieht sich auf eine an die Steuerspannung anschaltbare Steuervorrichtung für ein elektromagnetisches Schaltgerät der im Oberbegriff des Anspruchs 1 genannten Art.

Bei einer bekannten Steuervorrichtung der obengenannten Art (US—PS—4 176 388) ist zur Entprellung des Einschalters für die Betätigungsspule des Schützes eine mit Kondensatoren arbeitende Einschaltverzögerung vorgesehen. Bei Unterschreiten der Haltespannung für das Schütz bleibt dieses bei weiterhin anstehender Steuerspannung abgeschaltet. Bei dieser bekannten Steuervorrichtung ist eine galvanische Verbindung zwischen Last- und Steuerstromkreis erforderlich, da eine Kommutierung des Stromes erforderlich ist. Daher ist diese Vorrichtung nur für Batterieanwendungen geeignet. Infolge der hier vorhandenen Kondensatoren sind kurze Ausschaltperioden hier nicht möglich, da der clamp-Mechanismus am Thyristor bis zum Entladen der Kondensatoren erhalten bleibt. Außerdem ist der Abgleich der analog realisierten Zeitkonstanten kritisch, da die zeitbestimmenden Kondensatoren gleichzeitig als Energiespeicher für Ansteuerzwecke verwendet werden.

Bei einer weiterhin bekannten Steuervorrichtung (HL-Schütze Integral 32) ist für Gleichspannungsbetrieb ein Konverter vorgesehen, der einen Zustandswechsel zwischen Ein- und Auskommando mit einer gewissen Hysterese in bezug auf die Steuerspannung hervorruft. Hierdurch wird zwar ein definiertes Ein- und Ausschalten bei langsam variierender Steuerspannung erreicht. Die Hysteresebildung ist jedoch bei sich schnell ändernden Steuerspannungen zeitlich kaum wirksam, so daß es nach Einleitung einer Abschaltung bei schnell wiederkehrender Steuerspannung für das Schütz—wie bei herkömmlichen Antrieben—einen kritischen Spannungs- und Zeitbereich gibt, in dem der neuerliche Einschaltvorgang nicht ordnungsgemäß abläuft. Die Folge hiervon ist das Verbrennen und Verschweißen der Hauptkontakte des Schützes. Dieser Vorgang tritt unter anderem beim Einschalten großer Motoren mit hohen Anlaufströmen an einem schwachen Netz auf, da in diesem Netz die Steuerspannung für die Schütze mit zusammenbricht. Ein ähnliches Problem kann auch auftreten, wenn ein Schütz mit einer schnell schwankenden Steuerspannung betrieben wird, wie sie z.B. bei schlechter Kontaktgabe des vorgeschalteten Befehlsgeber entsteht (das sogenannte "Ratterkommando"). Durch die schnell aufeinanderfolgenden Ein- und Ausschaltvorgänge werden auch hier die Schützkontakte überhitzt und zerstört.

Es ist daher Aufgabe der vorliegenden Erfindung, eine Steuervorrichtung der obengenannten Art dahingehend zu ertüchtigen, daß bei nicht ordnungsgemäßen Steuerkommando oder auch stark schwankender Steuerspannung nachteilige Auswirkungen, insbesondere für die Kontakte des elektromagnetischen Schaltgerätes verhindert werden.

Dies wird auf einfache Weise bei der im Anspruch 1 definierten Steuervorrichtung erreicht.

Hierdurch ist eine sichere Realisierung einer Mindestausschaltdauer bei kurzzeitigem Wegfall der Steuerspannung gewährleistet.

Es hat sich als vorteilhaft erwiesen, wenn Ablaufkommando der Kontrollzeit und Ausbefehl auf ein UND-Gatter mit Speicherverhalten gelegt sind. Um während des Einbefehls den Strom in der Magnetspule zusätzlich zu beeinflussen, ist es vorteilhaft, wenn dem ersten Schaltelement ein weiteres Schaltelement vorgeschaltet und der Serienschaltung von dem ersten Schaltelement und der Betätigungsspule eine Freilaufdiode parallel liegt und dem ersten Schaltelement die endgültige Abschaltung obliegt. Dem ersten Schaltelement ein weiteres vorzuschalten und eine Freilaufdiode der Serienschaltung einer Betätigungsspule und eines Schaltelementes parallelzuschalten, ist an sich aus der GB—PS—1 370 942 bekannt. Es ist von Vorteil, wenn die Steuerung des weiteren Schaltelementes in Abhängigkeit von der Höhe der Steuerspannung freigegeben wird. Ferner ist es von Vorteil, wenn die durch die Freilaufdiode bewirkte Haltezeit des Schaltgerätes beim Auskommando größer als die bestimmte Dauer des Auskommandos ist.

Ein einfacher, konstruktiver Aufbau für die für die Steuervorrichtung notwendigen Einzelteile ergibt sich, wenn die bestimmte Dauer des Auskommandos, des Ausbefehls und der Kontrollzeit durch Kippstufen festgelegt ist. Aus der DE—A—2 318 437 ist an sich eine Steuervorrichtung mit eine Zeitdauer festlegenden, in einer analoger Technik ausgeführten monostabilen Kippstufen bekannt.

Anhand der Zeichnung wird ein Ausführungsbeispiel gemäß der Erfindung beschrieben und die Wirkung näher erläutert.

Es zeigen:

Fig. 1 ein Blockschaltbild für die Steuervorrichtung gemäß der Erfindung,

Fig. 2 die zeitlichen Verläufe von Steuerspannung und Schaltzustand des Schützes bei langsam variierender Steuerspannung,

Fig. 3 Steuerspannung und Schaltzustand des Schützes bei kurzzeitigen Steuerspannungseinbrüchen,

Fig. 4 die Darstellung gemäß Fig. 2 und 3 bei längeren Steuerspannungseinbrüchen,

Fig. 5 ein Diagramm, in dem zwei dicht aufeinander folgende, längere Steuerspannungseinbrüche berücksichtigt sind.

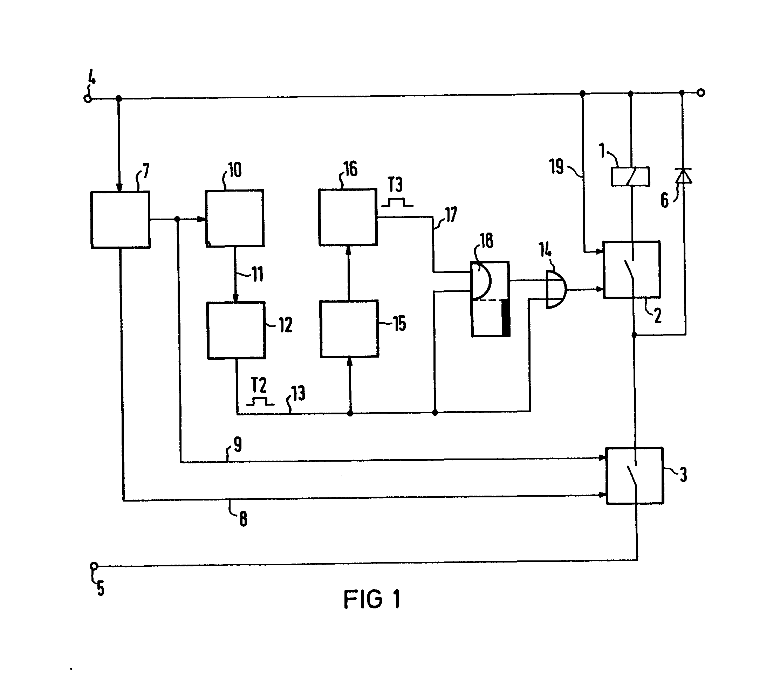

Im Blockschaltbild nach Fig. 1 ist die Spule 1 des herkömmlichen Schaltgerätes oder auch Schützes mit einem Schaltelement 2 und einem weiteren Schaltelement 3 in Reihe an die Steuerspannungsklemmen 4 und 5 angeschlossen, wobei die Schaltelemente 2 und 3 auch elektronische Schalter sein können. Parallel zur Reihenschaltung aus Spule 1 und Schaltelement 2 liegt eine Freilaufdiode 6, die beim Öffnen des Schaltelementes 3 eine Fortführung des Stromflusses durch die Spule 1 und das Schaltelement 2 bewirkt, um das elektromagnetische Schaltgerät kurzzeitig im geschlossenen Zustand zu halten. An der Steuerspannungsklemme 4 liegt weiterhin ein von der Steuerspannung beeinflußter Schwellwertbildner 7. Dieser Schwellwertbildner erzeugt auch eine Hysterese. Das Einkommando liegt über die Leitung 8 am Schaltelement 3 und das Auskommando über die Leitung 9 sowohl am Schaltelement 3 als auch an einem Block 10, der die Dauer einer die Ausschaltschwelle unterschreitenden Steuerspannung auswertet. Das positive Ergebnis wird über die Leitung 11 an den Block 12 weitergegeben, der über die Leitung 13 über eine Logikstufe 14 an das Schaltelement 2 für die Zeit T2 einen Ausbefehl abgibt. Der Block 15 wertet das Ende des Signals T2 in der Leitung 13 aus und gibt dies weiter an einen Block 16, der nach Anweisung von Block 15 eine Kontrollzeit T3 anlaufen läßt. Der Ausgang des Blockes 16 liegt über die Leitung 17 zusammen mit der Abzweigung der Leitung 13 an einem UND-Gatter mit Speicherverhalten 18, das seinerseits mit dem anderen Eingang der Logikstufe 14 verknüpft ist. Die Blöcke 10, 12 und 16 können als Kippstufen oder Zeitglieder ausgebildet sein.

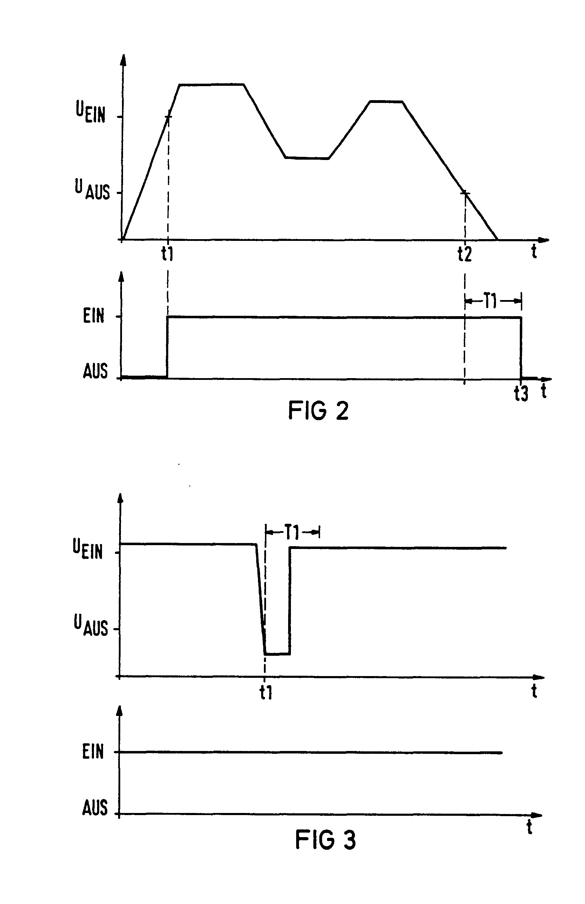

Zur Funktion der Steuervorrichtung wird auf die Figuren 2 bis 5 verwiesen. Die Fig. 2 zeigt im oberen Teil das Diagramm Steuerspannung über der Zeit und im unteren Diagramm Schaltzustand des Schützes über der Zeit. Beim Anlegen einer langsam ansteigenden Steuerspannung erfolgt zum Zeitpunkt t1, d.h. dem Erreichen der Einschaltschwelle, an das Schaltelement 3 der Einschaltbefehl. Der Stromkreis Steuerspannungsspule 1, Schaltelement 2 und Schaltelement 3 schließt sich, da der Einbefehl für das Schaltelement 2 über die Leitung 19 von der Steuerspannungsquelle 4 her anliegt, d.h. das Schütz schaltet ein. Unterschreitet nun die Steuerspannung die Schwelle $U_{EIN}$, so ändert sich zunächst am Schaltzustand des Schützes nichts. Unterschreitet dagegen zum Zeitpunkt t2 die Steuerspannung die Ausschaltschwelle $U_{AUS}$, so ergeht an das Schaltelement 3 der Ausbefehl. Zunächst ändert sich jedoch am Einschaltzustand des Schützes noch nichts, da der Spulenstrom über die Freilaufdiode 6 und das Schaltelement 2 weiterfließen kann. Erst wenn die Zeit, in der die Steuerspannung kleiner $U_{AUS}$ ist, größer als die vorgegebene Zeit T1 ist, ergeht zum Zeitpunkt t3 an das Schaltelement 2 über die Logikstufe 14 der Ausbefehl. Der Spulenstrom wird unterbrochen und das Schütz ändert seinen Schaltzustand. Die Zeit T1 gemäß Block 10 ist so zu wählen, daß der Freilaufstrom während der Zeit T1 unter keinen Umständen den Haltestrom des Magnetsystems unterschreitet.

Liegt nun (siehe Fig. 3) eine Steuerspannung größer als $U_{EIN}$ vor, so ist das Schütz eingeschaltet. Zum Zeitpunkt t1 wird die Ausschaltschwelle unterschritten und an das Schaltelement 3 der Ausbefehl gegeben. Der Spulenstrom fließt nun über das Schaltelement 2 und die Freilaufdiode 6 weiter. Da nach Ablauf der Zeit T1 die Steuerspannung wieder größer als $U_{EIN}$ ist, wird das Schaltelement 3 wieder geschlossen und der Strom fließt wie zuvor über die Schaltelemente 2 und 3 und die Spule 1. Am Schaltzustand des Schützes ändert sich somit während eines Absinkens der Steuerspannung unter den Wert $U_{AUS}$ nichts, wenn die Dauer des Steuerspannungseinbruches kleiner als T1 ist. In den Darstellungen ist jeweils ein Einschaltverzug und Ausschaltverzug vernachlässigt.

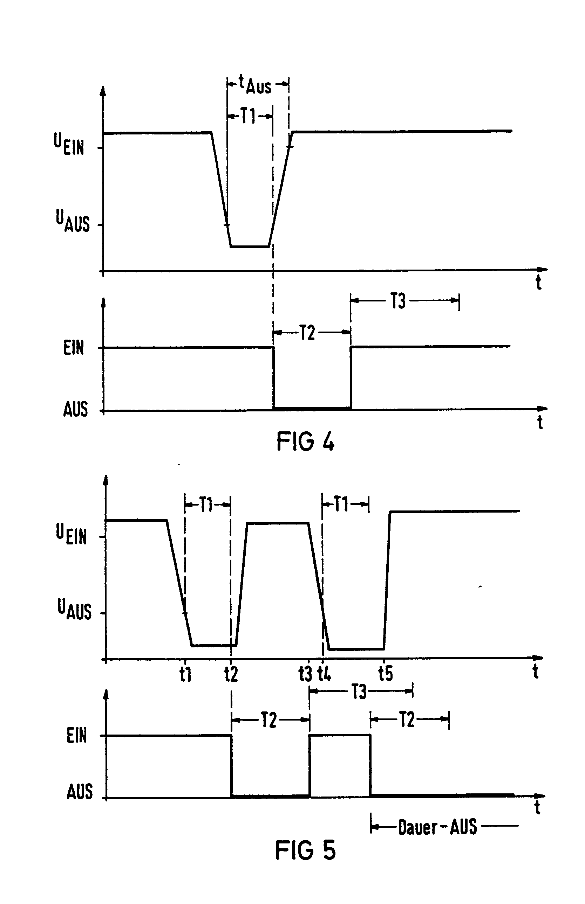

Im Falle gemäß Fig. 4 liegt zunächst ein ähnlicher Betriebszustand vor wie im Falle nach Fig. 3. Im Unterschied zum Fall nach Fig. 3 ist jedoch hier die Dauer des Steuerspannungseinbruches $t_{AUS}$ größer als die vorgegebene Zeit T1. Somit ergeht nach Ablauf der Zeit T1 auch an das Schaltelement 2 der Ausbefehl. Das Schütz schaltet somit aus. Dieser Ausbefehl bleibt für die Dauer einer festlegbaren Zeit T2, die durch den Block 12 bestimmt wird, erhalten, so daß auch dann das Schütz nicht einschaltet, wenn die Steuerspannung größer als $U_{EIN}$ wird und das Schaltelement 3 hierdurch in Einstellung gebracht wird. Erst wenn nach der Zeit T2 die Steuerspannung noch größer als $U_{EIN}$ ist, schaltet das Schütz durch Schließen des Schaltelementes 2 wieder ein. Die Zeit T2 ist hierbei so zu wählen, daß das Schütz mit Sicherheit ausschalten kann und das Magnetsystem des Schützes ganz abfallen kann. Somit wird verhindert, daß das Schütz in einen Betriebszustand gerät, bei dem es nicht ordnungsgemäß ausschaltet und es somit zur Zerstörung der Hauptkontakte kommen kann.

Die Anfangsphase im Diagramm nach Fig. 5 gleicht der nach Fig. 4. Die Steuerspannung unterschreitet zum Zeitpunkt t1 die Ausschaltschwelle und das Schaltelement 3 wird geöffnet. Da nach Ablauf der Zeit T1 zum Zeitpunkt t2 die Steuerspannung immer noch kleiner als $U_{EIN}$ ist, wird das Schaltelement 2 für die Dauer von T2 geöffnet, so daß das Schütz ausschaltet. Nach Ablauf der Zeit T2, also zum Zeitpunkt t3, wird die in Fig. 1 im Block 16 erzeugte Kontrollzeit T3 gestartet. Zur selben Zeit ist die Steuerspannung größer als $U_{EIN}$, so daß das Schütz wieder einschaltet. Zum Zeitpunkt t4 sinkt die Steuerspannung wieder für eine Zeit größer als T1 unter die Ausschaltschwelle ab. Ein derartiger Betrieb kann auftreten, wenn an einem schwachen Netz Motoren großer Leistung eingeschaltet werden, deren Anlaufstrom die Steuerspannung zusammenbrechen läßt. Dies würde ohne die erfindungsgemäße Schaltungsanordnung zu einem andauernden Ein- und Ausschalten führen und somit einen gefährlichen Betriebszustand ergeben. Im vorliegenden Fall kommt es nun während der Kontrollzeit T3 zu einem weiteren Ausschalten des Schützes; denn beide Eingänge des UND-Gatters mit Speicherverhalten 18 sind auf logisch 1, und somit wird das Schaltelement 2 in eine Dauerausstellung gebracht. Auch zu einem späteren Zeitpunkt (siehe bei t5) erfolgt keine Einschaltung des Schützes mehr, selbst wenn die Steuerspannung größer als $U_{EIN}$ ist. Dieser Zustand kann entweder durch Quittierung oder durch eine Unterbrechung der Steuerspannung aufgehoben werden.

## Patentansprüche

1. Steuervorrichtung für ein elektromagnetisches Schaltgerät, die eine über ein erstes Schaltelement (2) in Abhängigkeit von der Höhe der Steuerspannung an diese Steuerspannung anschaltbare oder von dieser Steuerspannung trennbare Betätigungsspule (1) enthält und die eine Hysteresebildung zwischen Ein- und Auskommando aufweist, wobei der Ausschaltzustand des Schaltelementes (2) über eine vorbestimmte Dauer (T2) erhalten bleibt und die Steuervorrichtung nach Ablauf des eine bestimmte Dauer (T1) aufweisenden internen Auskommandos (9) einen Ausbefehl (13) mit der vorbestimmten Dauer (T2) an das Schaltelement (2) abgibt, dadurch gekennzeichnet, daß der Ausbefehl mit der vorbestimmten Dauer (T2) eine Kontrollzeit (T3) vorbestimmter Dauer in Gang setzt, bis zu deren Ablauf das Schaltelement (2) bei einem auf ein neuerliches Einkommando folgenden Auskommando endgültig auf Ausbefehl gelegt ist.

2. Steuervorrichtung nach Anspruch 1, dadurch gekennzeichnet, daß Ablaufkommando (17) der Kontrollzeit (T3) und Ausbefehl (13) auf ein UND-Gatter (18) mit Speicherverhalten gelegt sind.

3. Steuervorrichtung nach Anspruch 1 oder 2, dadurch gekennzeichnet, daß dem ersten Schaltelement (2) ein weiteres Schaltelement (3) vorgeschaltet und der Serienschaltung von dem ersten Schaltelement (2) und der Betätigungsspule (1) eine Freilaufdiode (6) parallel liegt und dem ersten Schaltelement (2) die endgültige Abschaltung obliegt.

4. Steuervorrichtung nach Anspruch 3, dadurch gekennzeichnet, daß die Steuerung des weiteren Schaltelementes (3) in Abhängigkeit von der Höhe der Steuerspannung freigegeben wird.

5. Steuervorrichtung nach Anspruch 3 oder 4, dadurch gekennzeichnet, daß die durch die Freilaufdiode (6) bewirkte Haltezeit des ersten Schaltelementes beim internen Auskommando (9) größer als die bestimmte Dauer (T1) des internen Auskommandos (9) ist.

6. Steuervorrichtung nach einem der vorhergehenden Ansprüche, dadurch gekennzeichnet, daß die bestimmte Dauer (T1) des internen Auskommandos (9), des Ausbefehls und der Kontrollzeit jeweils durch Kippstufen festgelegt ist.

7. Steuervorrichtung nach Anspruch 6, dadurch gekennzeichnet, daß die Kippstufen in analoger Technik aus monostabilen Kippstufen bestehen.

8. Steuervorrichtung nach Anspruch 6, dadurch gekennzeichnet, daß die Kippstufen in digitaler Technik aus Zählstufen bestehen.

## Revendications

1. Dispositif de commande pour un appareil de coupure électromagnétique, qui comporte une bobine d'actionnement (1) pouvant être raccordée par l'intermédiaire d'un premier élément de coupure (2) à la tension de commande ou être séparé de cette dernière, en fonction de l'amplitude de la tension de commande, l'état ouvert de l'élément de coupure (2) étant maintenu pendant une durée prédéterminée (T2) et le dispositif de commande délivrant une instruction d'ouverture (13) possédant la durée prédéterminée (T2) à l'élément de coupure (2) après l'exécution de l'ordre interne d'ouverture (9) possédant une durée déterminée (T1), caractérisé par le fait que l'instruction d'ouverture possédant la durée prédéterminée (T2) déclenche l'écoulement d'un intervalle de temps de contrôle (T3) possédant une durée prédéterminée, jusqu'à la fin duquel une instruction d'ouverture est finalement appliquée, à l'élément de coupure dans le cas où un ordre d'ouverture succède à un nouvel ordre de fermeture.

2. Dispositif de commande suivant la revendication 1, caractérisé par le fait que l'ordre (17) de déroulement de l'intervalle de temps de contrôle (T3) et l'instruction d'ouverture (13) sont envoyés à une porte ET (18) présentant un comportement de mémoire.

3. Dispositif de commande suivant la revendication 1 ou 2, caractérisé par le fait qu'un autre élément de coupure (3) est branché en amont du premier élément de coupure (2) et qu'une diode à fonctionnement unidirectionnel (6) est branchée en parallèle avec le circuit série formé du premier élément de coupure (2) et de la bobine d'actionnement (1) et que l'action finale de coupure est déclenchée par le premier élément de coupure (2).

4. Dispositif de commande selon la revendication 3, caractérisé en ce que la commande de l'autre élément de coupure (3) est libérée en fonction de l'amplitude de la tension de commande.

5. Dispositif de commande suivant la revendication 3 ou 4, caractérisé par le fait que la durée de maintien, établie par la diode à fonctionnement unidirectionnel (6), du premier élément de coupure pour un ordre interne d'ouverture (9) est supérieure à la durée déterminée (T1) de l'ordre interne d'ouverture (9).

6. Dispositif de commande suivant l'une des revendications précédentes, caractérisé par le fait que la durée déterminée (T1) de l'ordre interne d'ouverture (9), de l'instruction d'ouverture et de l'intervalle de temps de contrôle est fixée respectivement au moyen d'étages à bascule.

7. Dispositif de commande suivant la revendication 6, caractérisé par le fait que les étages à bascule sont constitués, selon la technique analogique, par des étages à bascule monostable.

8. Dispositif de commande suivant la revendication 6, caractérisé par le fait que les étages à bascule sont constitués, selon la technique numérique, par des étages de comptage.

## Claims

1. A control device for an electromagnetic switchgear, which control device contains an operating coil (1) able to be connected to control voltage or able to be separated from this control voltage by way of a first switching element (2) in dependence on the height of the control voltage, and which control device has a hysteresis formation between the ON- and OFF- command, wherein the disconnecting state of the switching element (2) is maintained over a predetermined duration (T2), and the control device, after expiration of the internal OFF-command (9) having a predetermined duration (T1), delivers an OFF-instruction (13) with the predetermined duration (T2) to the switching element (2), characterised in that the OFF-instruction with the predetermined duration (T2) initiates a control time (T3) with a predetermined duration, until the expiration of which the switching element (2) is set finally to the OFF-instruction in the case of an OFF-command following a renewed ON-command.

2. A control device according to claim 1, characterised in that the timing command (17) of the control time (T3), and the OFF-instruction (13), are applied to an AND-gate (18) with storage properties.

3. A control device according to claim 1 or 2, characterised in that a further switching element (3) is connected upstream of the first switching element (2) and that a free-wheeling diode (6) lies parallel to the series connection of the first switching element (2) and the operating coil (1), and the final disconnection is dependent upon the first switching element (2).

4. A control device according to claim 3, characterised in that the control of the further switching element (3) is released in dependence on the height of the control voltage.

5. A control device according to claim 3 or 4, characterised in that the holding time of the first switching element, effected by the free-wheeling diode (6), with the internal OFF-command (9), is greater than the determined duration (T1) of the internal OFF-command (9).

6. A control device according to one of the preceding claims, characterised in that the determined duration (T1) of the internal OFF-command (9), of the OFF-instruction and of the control time is determined in each case by flip-flops.

7. A control device according to claim 6, characterised in that the flip-flops consist, in analog technology, of monostable flip-flops.

8. A control device according to claim 6, characterised in that the flip-flops consist, in digital technology, of counting stages.

FIG 1

FIG 2

FIG 3

FIG 4

FIG 5